# EUROPEAN PATENT SPECIFICATION

(11) **EP 1 638 870 B1**
(45) Date of publication and mention of the grant of the patent: **02.01.2008**
(21) Application number: 04736608.3
(22) Date of filing: 10.06.2004
(51) Int. Cl.: B65G 47/76, B65G 47/84, B07C 3/06

(54) **SORTER DEVICE**
SORTIERVORRICHTUNG
DISPOSITIF DE TRI

(30) Priority: 01.07.2003 NO 20033014
(43) Date of publication of application: 29.03.2006
(73) Proprietor: Tomra Systems ASA, 1385 Asker (NO)
(72) Inventor: LARGE, Bengt, 0777 Oslo (NO); ONSTAD, Hans, Georg, 1386 Asker (NO)
(74) Representative: Sundien, Thomas
(86) International application number: PCT/NO2004/000167
(87) International publication number: WO 2005/003003

(56) References cited:
- DE-A1- 2 728 936
- US-A- 4 541 532
- US-A- 4 564 105
- US-A- 5 655 643
- US-A1- 2001 032 807
- US-A1- 2003 024 215

## Description

The present invention relates to a device for directionally guiding articles of different shapes that are being conveyed on a conveyor off the conveyor with the aid of a movable gate that is controllable to turn across the conveyor to an angle to the direction of movement of the conveyor (see for instance US- A-4 564 105).

Such devices are well known in many contexts, but often have the common characteristic that the articles are slowed unduly by the gate, especially if the gate forms a large angle with the direction of travel of the conveyor.

Therefore, there has long been a need to be able, in an effective and simple manner, to remove articles from a conveyor using a movable gate so as to ensure an efficient removal.

According to the invention, the device is therefore characterised in that the gate has at least one rotary motor-driven fully circular disc which is configured to cause the article to be forcibly driven through aid of disc rotation along the gate, in a direction corresponding to said angle, off the conveyor and to an exit, when the disc is located in a position forming said angle.

Other embodiments of the device will be apparent from the attached subsidiary claims and from the following description with reference to the attached drawings.

In the following drawings, the phrase "sorting to the left" means that the device causes sorting to the left-hand side seen in relation to the direction of travel of the conveyor. Similarly, the phrase "sorting to the right" will be related to the direction of travel of the conveyor.

In the attached drawings, the different embodiments of the device are shown as typical exemplary embodiments which could be modified without thereby deviating from the inventive idea.
Figure 1 shows a device for sorting to the left, with the gate at a first angle relative to the direction of travel of the conveyor.
Figure 2 shows the device for sorting to the left, with the gate at a second angle relative to the direction of travel of the conveyor.
Figure 3 shows the device intended for sorting to the left, with the gate at a third angle.
Figure 4 shows the device for sorting to the right, with the gate at a second angle relative to the direction of travel of the conveyor.
Figure 5 shows a detail of the device for sorting to the left shown for a first angle relative to the direction of travel of the conveyor.
Figure 6 is a sectional view of a part of Figure 5 with a cover removed to reveal structural details.
Figure 7 shows the device intended for sorting to the right at a third angle relative to the direction of travel of the conveyor.
Figure 8 shows the device for sorting to the right with the gate placed at a first angle relative to the direction of travel of the conveyor.
Figure 9, like Figure 6, shows internal parts of the device intended for sorting to the left, and with the gate positioned at a second angle relative to the conveyor.
Figure 10 shows the device according to the invention in cooperation with a reverse vending machine for articles in the form of empties, for example, bottles or cans.
Figure 11 shows a further embodiment of the device according to the invention.
Figure 12 is a block diagram intended to visualise control of the device according to Figure 10.
Figs. 13a-13d show alternative angular positions for the embodiments shown in Figures 1-10.
Figures 14a-14g show alternative angular positions for the embodiment shown in Fig. 11.
Figs. 15a-15c are images of the device essentially according to Fig. 11 in a first angular position.
Figs. 16a-16b are images of the device essentially according to Fig. 11 in a second angular position.
Fig. 17 is an image of the device essentially according to Fig. 11 in a third angular position.

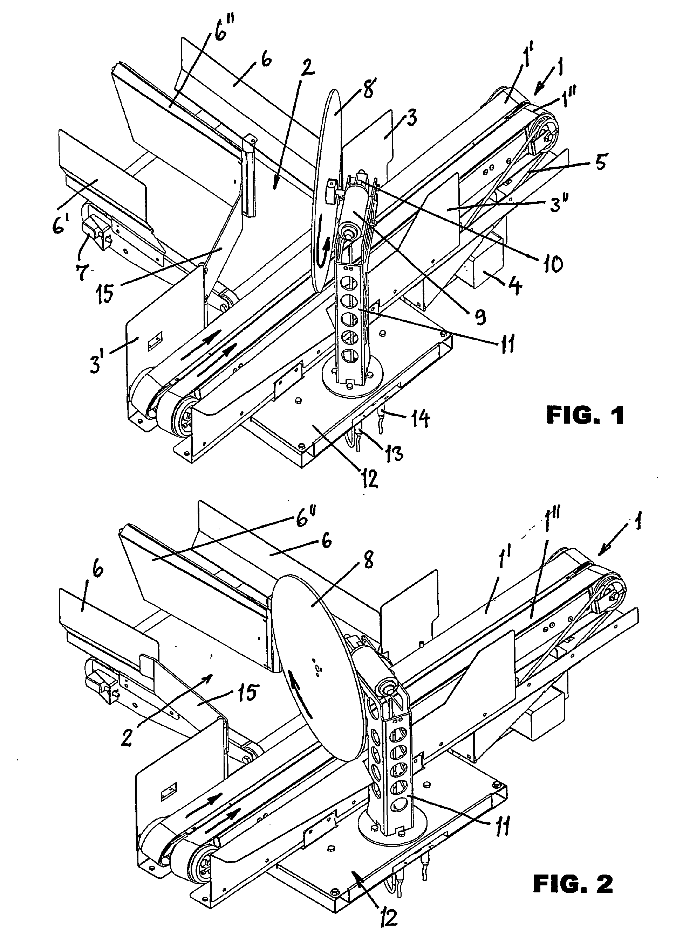

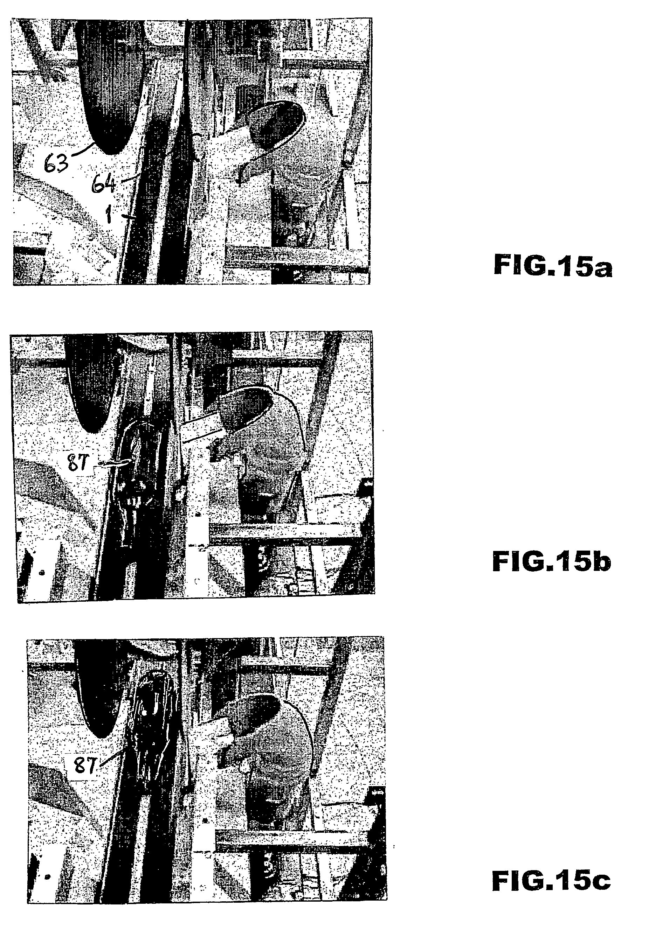

Figure 1 shows an exemplary embodiment of the device according to the invention, wherein a conveyor 1 is provided, equipped in the preferred example with two belt halves 1', 1" which are run at the same speed by a motor 4 via a drive element 5, for example, a belt or a chain. Alternatively, the motor may be directly connected, as shown in the case of the motor 65 in Figure 15. The two conveyor belt parts 1, 1" together form a V-shape so that articles conveyed on the conveyor 1 remain in place. Thus, a conveyor of this kind will be particularly suitable for conveying lying articles, such as empty bottles or empty cans, although the device can be used for other types of articles that are to be conveyed off the conveyor 1.

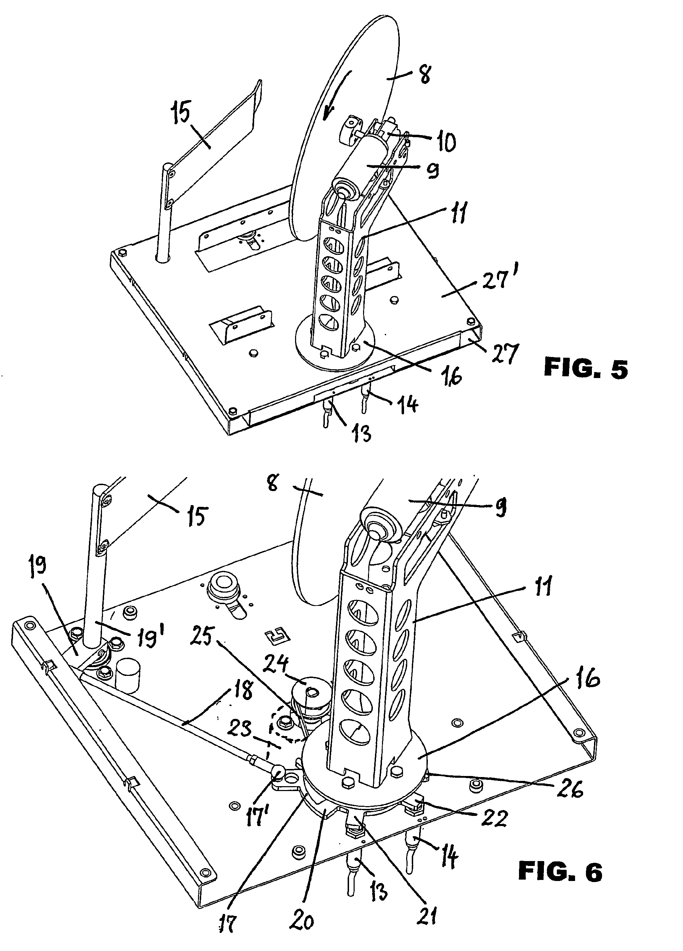

Transverse to the conveyor 1 there may be, for example, for sorting articles to the left, a conveyor 2 that is driven by a motor 39 (Figure 15) and where the conveyor 2 is pretensioned by tensioning blocks 7, 7'. Side walls 6, 6' and a central dividing wall 6" are found in connection with the conveyor 2. In the illustrated example in Figure 1, the gate is formed of a rotatable disc 8, preferably provided with a friction surface on the side that is to face the article to be moved away. The rotational movement of the rotatable disc can be caused by a motor 9 via a bevel gear drive 10. Alternatively, the motor may be connected directly to the disc. The motor-driven, rotatable disc is supported on an angle arm 11 that is rotatably connected to a supporting structure 12. Detectors 13, 14 are provided for detecting the angular position of the gate, in this case the disc 8, relative to the direction of travel of the conveyor 1. The angle arm 11 cooperates with an auxiliary gate or guide flap 15. The angle arm 11, and thus the gate in the form of the disc 8 are caused to turn by a motor 23 via a drive pulley 24 and transmission 25 to a turning platform 16 to which the angle arm 11 is fixed. At the same time, a flag device 17 that is associated with the turning platform 16 will cause movement of the auxiliary gate 15. This auxiliary movement is provided via articulation 17', connecting arm 18, articulation 18' and an arm 19 in connection with a rotatable post 19' to which said auxiliary gate 15' is secured. The flag device 17 has flags 20, 21, 22 and 26 for detecting, with the aid of the detectors 13, 14, the angular position that the gate or disc 8 is in relative to the direction of travel of the conveyor. Although the motor 23 can be controlled to allow the angle arm 11, and thus the disc 8, to assume the correct angular position relative to the direction of travel of the conveyor, the detectors 13, 14, in cooperation with the position flags 20, 21, 22 and 26, are nevertheless important for ensuring at all times that the correct position has been obtained. The flag device 17, together with the detectors 13, 14 may be optical, electromagnetic, capacitive or electromechanical. In the preferred exemplary embodiment of the invention, the flag device is electromagnetic. As shown in Figure 2, the angle arm 11 is mounted on a base or a supporting structure 12 consisting of a bottom part 27 and a top part 27', as shown in Figure 5. In Figure 6, the top part 27' has been removed for the sake of clarity.

Guide walls 3, 3' and 3" are also provided at each device to ensure that the article, when guided off the conveyor 1, does not accidentally roll off the conveyor 1 as a consequence of the angular position of the gate relative to the conveyor.

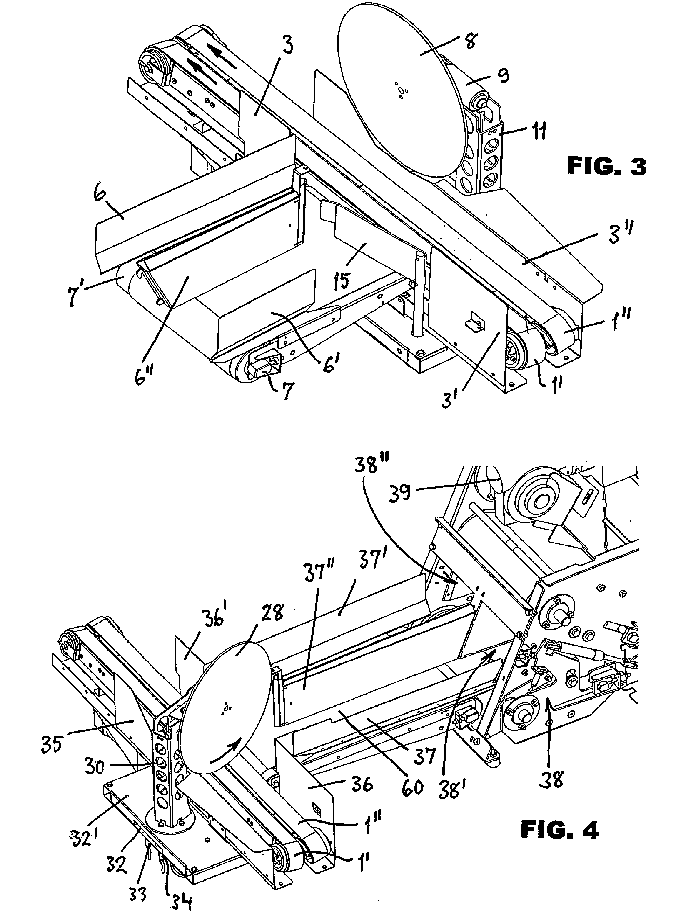

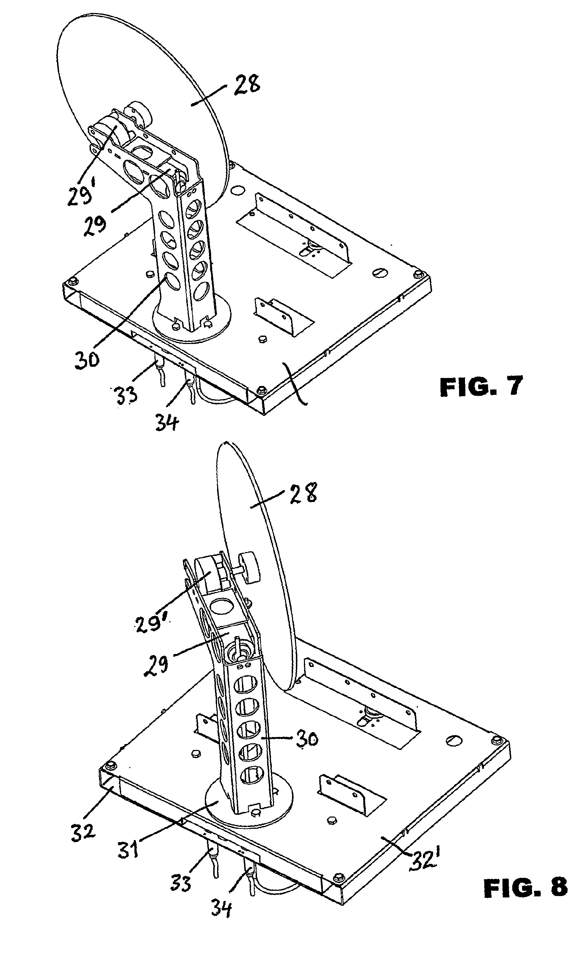

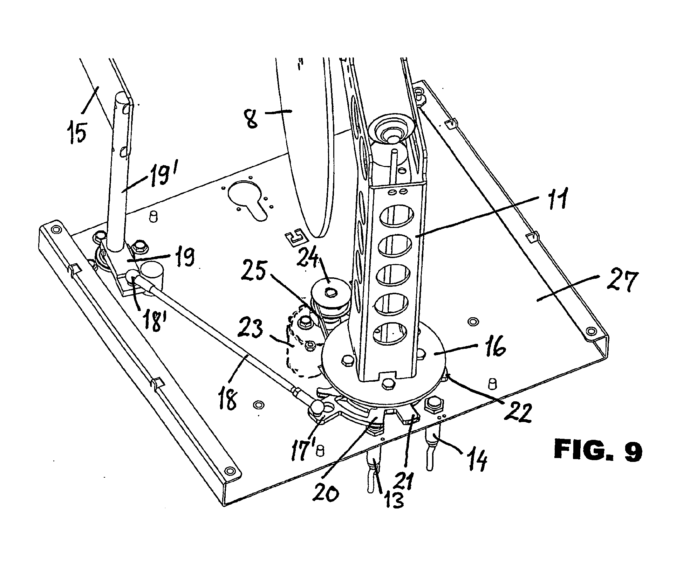

Figure 4 shows the device according to the invention prepared for sorting to the right relative to the conveyor 1. In the illustrated case, the gate is represented by a rotatable disc 28, preferably equipped with a friction surface, in the same way as the disc 8. As shown in Figures 7 and 8, the disc 28 is driven by a motor 29 via a bevel gear drive 29'. Alternatively, the position of the bevel gear drive 29' could be replaced by a motor (not shown), which thus could be directly connected to the disc 28. As illustrated, the disc 28 is supported by an angle piece 30 that is mounted on a turning platform 31, which turning platform 31 is supported on a base or a supporting structure 32, 32'. The locational angular position of the gate or the disc 28 relative to the direction of travel of the conveyor 1 is detectable by means of detectors 33, 34 which correspond to the detectors 13, 14 as described above. To prevent the article that is to be conveyed off the conveyor 1 from accidentally rolling off the conveyor 1, guide walls 35, 36, 36' are provided as shown in Figure 4. Like the guide walls 3-3" as shown in Figures 1-3, these walls also prevent articles from being accidentally caught on, for example, the gate 8 or an edge of the wall 37'. Transverse to the conveyor 1 there is, for sorting to the right, a conveyor 60 which is driven by a motor 60'. Guide walls 37, 37' and partition wall 37" are found in connection with the conveyor 60.

In the illustrated example, the conveyor 60 runs to a compactor and/or a disintegrator 38 which has two compartments 38', 38". These two compartments 38' and 38" are preferably constructed differently, but operated by a common drive unit 39. A first exit from the gate 8 is thus defined by guide walls 37, 37" and a second exit is defined by the guide walls 37', 37".

An after-treatment unit in the form of a two-chamber compactor and/or disintegrator is known per se, but not in connection with a device as shown and described in connection with Figures 1-9.

In Figures 1-9, the rotatable disc is shown with a lying, preferably horizontal axis of rotation. However, this should not be regarded as limiting since the disc may alternatively have a non-horizontal axis of rotation.

As shown in Figures 1-9, the gate with its moving means is controllable to assume at least three angularly different positions relative to the conveyor 1.

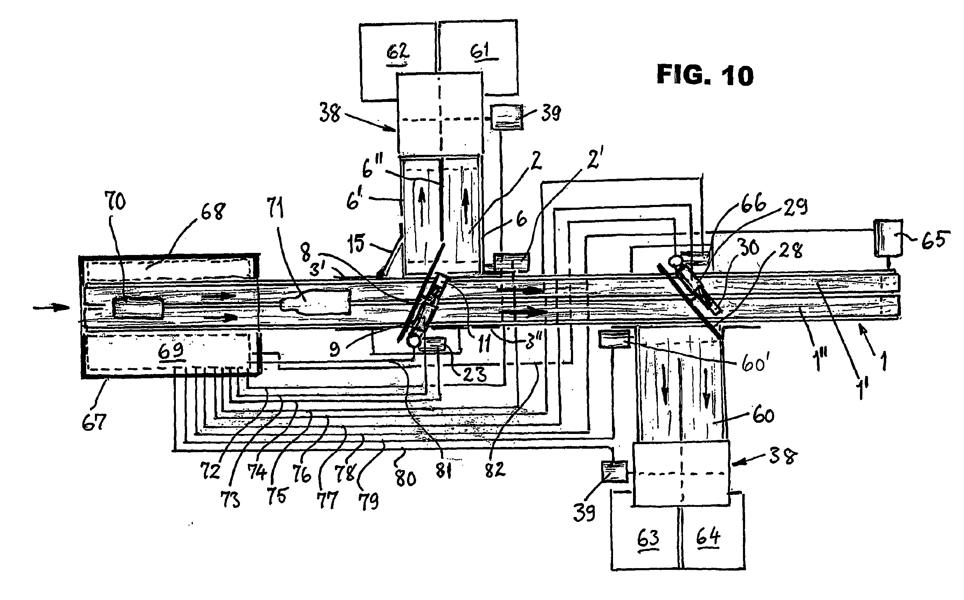

As shown in Fig. 10, and with reference to the preceding figures, the gate will be arranged to guide articles to an exit, and where, with the aid of the controllable gate, it is possible to select the exit from between at least a first and a second exit, as is also clear from Figure 10. In the illustrated example in Figure 10, the exits in connection with the conveyor 2 lead via an after-treatment unit 38 to receptacles 41, 42. The after-treatment unit 38 may, as shown and described above, optionally consist of a compactor and/or disintegrator. Receptacles 43, 44 will also be arranged in connection with the conveyor 60.

As mentioned above, the conveyor 1 may optionally be driven by a motor 45. The turning of the angle arm 30 and thus the gate 28 can be effected by a motor 46.

In the illustrated exemplary embodiment in Figure 10 there is also provided a feed-in unit 47, for example, a return vending machine for articles in the form of boxes 30 and/or bottles 31. The reverse vending machine 47 has a detector unit 48 for identifying or detecting features or parameters related to the individual article 30, 31 such as shape, weight or size, and possibly other identifying features such as bar codes or other markings. The reverse vending machine 47 has, in addition. a processor and a control unit 49 which cooperates with the detector unit 48. Thus, the reverse vending machine will, on the basis of the detection of an article, give the moving means of the gate, as for example, the disc 8, a working speed at which the means makes contact with the article that is a function of the angle the gate is to form with the direction of travel of the conveyor 1. Thus, the working speed of said means could be a function of the weight, size and/or shape of the article, or other characteristic features, for example, a bar code.

The working speed of the moving means may also be a function of the working speed of the conveyor 1, and it is advantageous that the working speed of the moving means is equal to or greater than the working speed of the conveyor. In a preferred embodiment, the disc 8 may be arranged so as to be able to cause the article to be given accelerated movement off the conveyor belt.

As will be understood with reference to Figures 6 and 9, the auxiliary gate 15 will be arranged so that when the gate itself is turned, it assumes a desired angular position essentially parallel to the gate and at a distance therefrom adapted to be able to guide the article through a space between the gate and the auxiliary gate.

The detector unit 48 in the reverse vending machine 47 is, as shown in Figure 10, arranged upstream of the gates 8, 28 for identifying or detecting the characteristic features or parameters that the article has. On the basis of identified or detected features or parameters, the device, via the processor and control unit 49, will be arranged to control the gate to assume the desired angular position relative to the conveyor. The unit 49 will also be able to control the working speed of, for example, the discs 8 or 28 relative to the working speed of the conveyor and/or the angular position of the gate.

As shown in Figure 10, the motor 39 communicates with the unit 49 via control 52. However, this control may be based on continuous operation of the motor 39. The motor 9 which drives the disc 8 is controlled from the unit 49 via control line 53. Control line 54 from the unit 49 is arranged to actuate the motor 23 and thus govern the angular position of the disc 8 relative to the direction of travel of the conveyor 1. Control line 55 from the unit 49 runs to a drive motor 2' for the conveyor 2. The control in this case may be based on continuous operation of the conveyor 2, but it will also be possible, with the aid of the unit 49, to regulate the rotation of the motor 2' and thus the working speed of the conveyor 2.

Control line 56 from the unit 49 runs to the motor 46 which controls the angular position of the gate 28 relative to the conveyor.

Control line 57 is passed from the unit 49 to the motor 29 which operates the disc or gate 28.

Control line 58 extends from the unit 49 to the motor 45 to regulate the speed of the conveyor 1 if this is desirable.

Control line 59 from the unit 49 controls the drive motor 40' for the conveyor 40. Control line 60 from the unit 49 runs to a drive motor 39 for the after-treatment unit 38 that is mounted in connection with the conveyor 40. The after-treatment unit 38 and the motor 39 in connection with the conveyor 40 will preferably be of the same general design and function as the unit 38 and the motor 39 in connection with the conveyor 2.

The line 61 connects the detector 13, 14 with the unit 49. In a similar way, the detectors 33, 34 will be connected to the unit 49 via line 62.

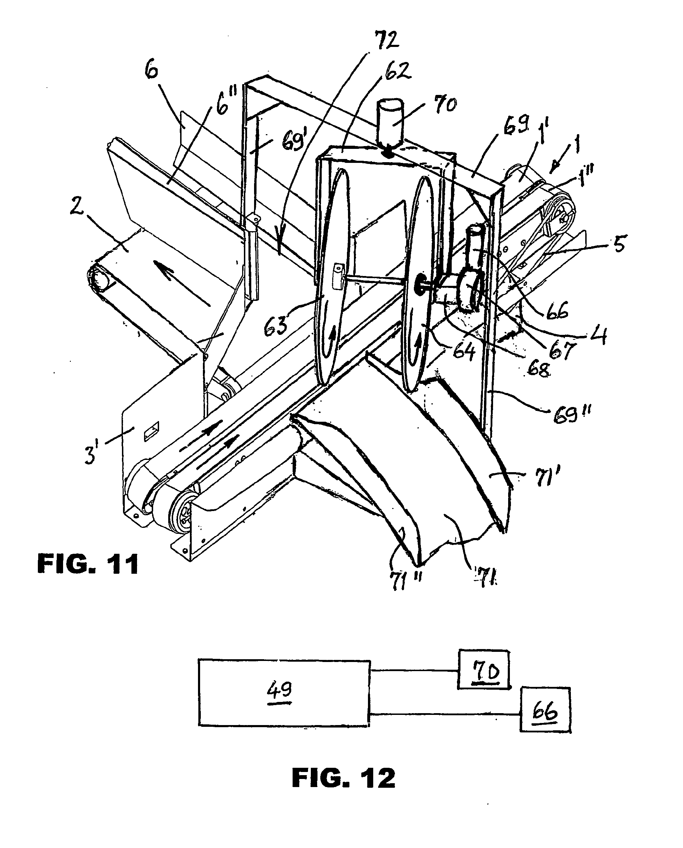

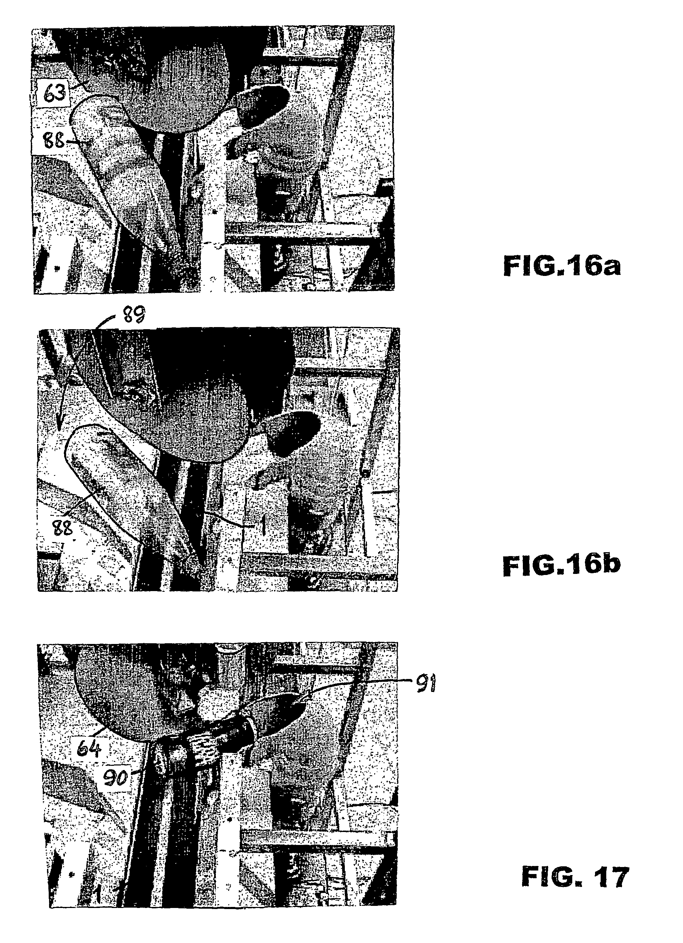

The further embodiment shown in Figure 11 has two motor-driven discs 63, 64 that are driven by a motor 66, wherein the space between the discs 63, 64 is adapted to the width of the conveyor in such manner that articles can pass unobstructed between the discs when the pair of discs 63, 64 is in a first position, parallel to the direction of travel of the conveyor. In Figure 11, the pair of discs is shown in a second angular position. The discs 63, 64 have a common drive shaft and are mounted on a frame 69, 69', 69" which has a motor 70 that causes controlled turning of a suspension bracket 65 for the pair of discs 63, 64. Operation of the pair of discs is effected from the motor 66 via gear and power transmission 67, 68. The operation of the motor 66 is advantageously continuous, but may be discontinuous. The angular position that the pair of discs 63, 64 assumes will be determined by the unit 49 via the controlled motor 70. The axis of rotation of the bracket 65 will advantageously be orthogonal to the longitudinal, central axis of the conveyor 1. It is of course conceivable that the motor could be replaced by a solenoid with controllable arms for moving the bracket 65. Similarly, the motor 66 may be expediently controlled via the unit 49; see Fig. 17.

As shown in Fig. 11, it is conceivable that articles are passed out via the exit 72 or the exit 71, 71', 71", or optionally passed onwards through the discs 63, 64 towards the end of the conveyor 1.

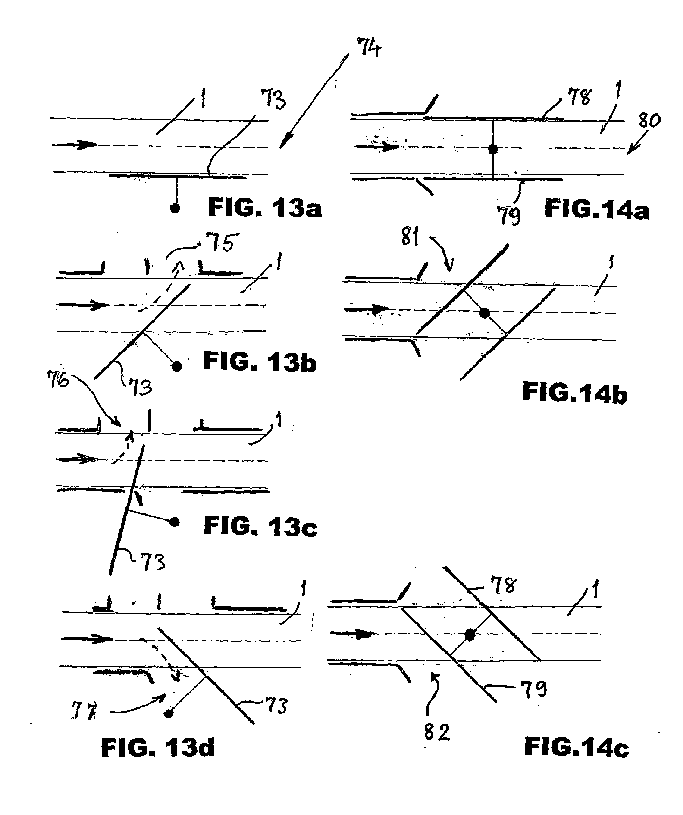

Figs. 13a-13d show a single gate 73 in a first position in which it can allow articles to move forwards on the conveyor belt 1 towards an exit 74. In a second position as shown in Fig. 13b, the gate 73 is capable of guiding an article towards an exit 75. In a third position as shown in Figure 13c, the gate 73 is capable of guiding an article towards an exit 76. In a fourth position as shown in Figure 13d, the gate 73 is capable of guiding an article towards an exit 77 on the opposite side of the conveyor.

Between the positions in, for example, Figure 13c and Figure 13d, the gate must move across a large angle of almost 120° in order to have the capability of sorting to both sides of the conveyor 1. The range of movement will also be large. The solution with the single disc is therefore most appropriate for sorting, for example, to just one side of the conveyor 1.

In the solution shown in Figs. 14a-14c and which in one embodiment corresponds to that shown in Fig. 11, there is a simultaneously moving pair of rotatable gates 78, 79, for example, corresponding to the discs 63, 64 in the embodiment shown in Fig. 11. The angular position of the pair of gates 78, 79 relative to the conveyor is controlled from the unit 49 via a motor 70. The axis of rotation for the angular adjustability of the pair of gates will advantageously be orthogonal to the longitudinal central axis of the conveyor. The pair of gates advantageously has twin drive or synchronised drive, for example, provided by a motor 66.
In a first position, as shown in Figure 14a, the pair of gates 78, 79 is parallel to the length of the conveyor. Thus, articles will, with the aid of the conveyor 1, move between the gates 78, 79 and towards an exit 80.

In a second position of the pair of gates 78, 79 as shown in Figure 14b, articles will be guided towards an exit 81 on one side of the conveyor by the gate 79, whilst in a third position as shown in Figure 14c, the gate 79 of the pair of gates will guide articles towards an exit 82.

The solution shown in Figures 11 and 14a-14c is especially suitable for sorting straight ahead or to both sides of the conveyor. This permits simple standardisation of the gate solution, and avoids a mirror version of the mounting equipment for the gate solution shown in Figures 1-10 and 13.

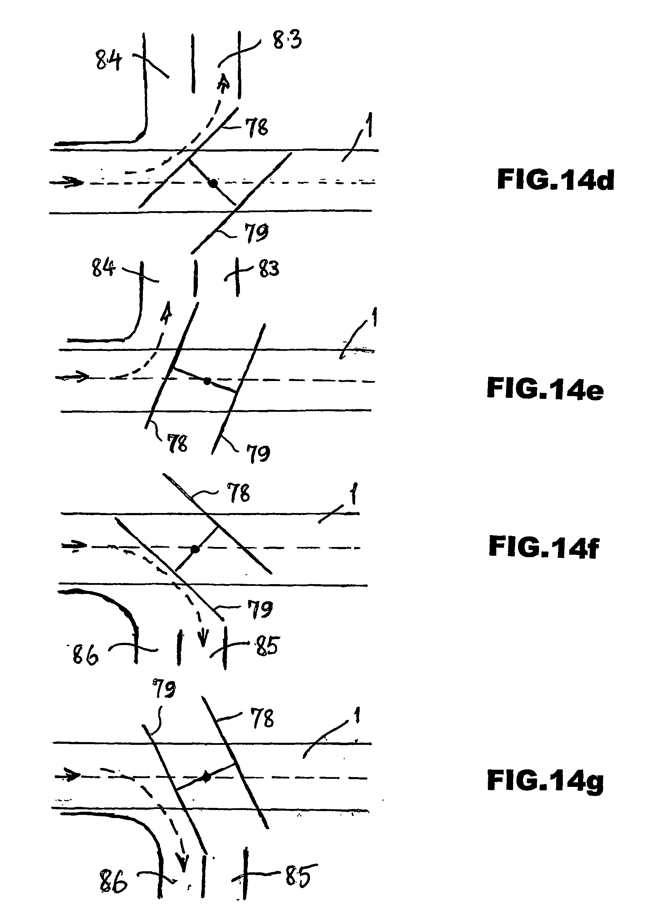

If the gate exits for a solution as shown in Figure 14 are designed to be exits divided by a wall or the like at a slightly greater distance from the conveyor 1 than that shown in Figures 14b and 14c, as shown in Figures 14d-14g, there will be a possibility of having two exits 83, 84, or 85, 86 on each side of the conveyor, in addition to the possibility of the conveying of articles straight on towards the exit 80. This gives a unique option for sorting at each gate unit.

The solution shown in Figures 14d-14g thus permits a total of five sorting solutions. With, for example, two such units positioned one after the other, it will be possible for articles to be moved with the aid of two controllable units to a total of nine exits. This means that the solution in Figures 13a-13d give a maximum of 3n + 1 sorting options, but usually 2n + 1; the solution in Figures 14a-14c give 2n + 1 sorting options, and the solution in Figures 14d-14g fives 4n + 1 sorting options, wherein n is the number of units of the type in question.

Figures 15a-15c show a photograph of a prototype solution as outlined in Figure 10 and Figure 14, wherein a bottle 87 is conveyed straight ahead on the conveyor 1 between the discs 63, 64.

In Figures 16a-16b, the discs have been turned to a second angular position, and the disc 63 guides, for example, a bottle 88 off the conveyor towards an exit 89.

In Figure 17, the discs have been turned to a third angular position, so that the disc 74 guides, for example, an empty beverage can 90 off the conveyor 1 to an exit 91, for example, a chute.

Although the illustrated device will generally be useful for many types of articles that are to be moved on a conveyor and at chosen points guided off the conveyor, the device according to a preferred application is used for sorting articles in the form of empties, for example, bottles or cans.

## Claims

1. A device for directionally guiding articles of different shapes that are being conveyed on a conveyor (1) off the conveyor with the aid of a movable gate that is controllable to turn across the conveyor to an angle relative to the direction of movement of the conveyor,
**characterised in**
- **that** the gate has at least one rotary motor-driven fully circular disc (8, 28, 63, 69, 73, 78, 79) which is configured to cause the article to be forcibly driven through aid of disc rotation along the gate, in a direction corresponding to the said angle, off the conveyor and to an exit, when the disc is located in a position forming said angle.

2. A device according to claim 1,
**characterised in**
- **that** the gate has two motor-driven, rotary and parallel discs (63, 64, 78, 79) rotating in the same rotational direction, wherein the two discs are spaced by a distance that is greater than the largest cross-section of an article to be guided.

3. A device according to claim 2,
**characterised in**
- **that** the gate has a central position in which the two discs are parallel to the longitudinal direction of the conveyor to allow articles to pass unobstructed therebetween.

4. A device according to claim 2 or 3,
**characterised in**
- **that** the two discs are driven by a common drive motor via a common drive shaft, and that the two discs are arranged to be turned into said angle relative to a common pivot point located centrally above the conveyor.

5. A device according to claim 1, 2, 3 or 4, **characterised in**
- **that** said at least one circular disc has a non-vertical axis of rotation.

6. A device according to claim 1, 2, 3, 4 or 5,
**characterised in**
- **that** said at least one circular disc has a horizontal axis of rotation.

7. A device according to claim 1, 2, 3 or 4,
**characterised in**
- **that** said at least one circular disc has a non-horizontal axis of rotation.

8. A device according to one or more of claims 1-7,
**characterised in**
- **that** said gate is controllable to assume at least three angularly different positions relative to the movement direction of the conveyor.

9. A device according to one or more of claims 1-8,
**characterised in**
- **that** said gate is arranged to assume at least five angularly different positions relative to the movement direction of conveyor.

10. A device according to one or more of the preceding claims,
**characterised in**
- **that** said at least one circular disc has a speed of rotation which yields a surface speed at a radial location on the disc where the disc makes contact with the article, said speed being a function of the angle which the gate turned relative to the direction of movement of the conveyor.

11. A device according to one or more of claims 1-10,
**characterised in**
- **that** said at least one circular disc has a speed of rotation which yields a surface speed at a radial location on the disc where the disc makes contact with the article, said speed being a function of the weight, size and/or shape of the article.

12. A device according to claim 10 or 11,
**characterised in**
- **that** the speed of rotation of the circular disc is a function of the movement speed of the conveyor.

13. A device according to claim 12,
**characterised in**
- **that** the speed of rotation of the circular disc is equal to or greater than the movement speed of the conveyor.

14. A device according to one or more of claims 1-13,
**characterised in**
- **that** said at least one rotary and circular disc is designed to cause the article to be given an accelerated movement off the conveyor.

15. A device according to any one of the preceding claims,
**characterised in**
- **that** said at least one rotary and circular disc has a frictional surface.

16. A device according to claim 9 or 10,
**characterised in**
- **that** the gate is cooperative with a flag device (17) for detecting the angular position of the gate relative to the direction of movement of the conveyor.

17. A device according to claim 16,
**characterised in**
- **that** the flag device is optical, electromagnetic, capacitive or electromechanical.

18. A device according to one or more of the preceding claims,
**characterised in**
- **that** the gate (8) is designed, upon turning into a desired angular position, to cause, at the same time, movement of an auxiliary gate (15) cooperative with the gate and positioned essentially parallel to the gate at a distance therefrom adapted to be able to pass the article through a space therebetween.

19. A device according to one or more of the preceding claims,
**characterised in**
- **that a** detector device (13, 14, 33, 34) for identifying or detecting any characteristic features or parameters of the article is located upstream of the gate and adjacent the conveyor.

20. A device according to claim 19,
**characterised in**
- **that** the device is, on the basis of said identified or detected features or parameters, designed to control the gate to assume a desired angular position relative to the conveyor.

21. A device according to claim 18 or 19,
**characterised in**
- **that** device is, on the basis of said identified or detected features or parameters, designed to control the speed of rotation of the at least one disc relative to the movement speed of the conveyor and/ or the angular position of the gate relative to the conveyor.

22. A device according to one or more of claims 1-21,
**characterised in**
- **that** the gate is designed to guide articles to said exit, wherein said exit is, with the aid of the controllable gate, selectable from among at least a first and a second exit.

23. A device according to claim 22,
**characterised in**
- **that** at least one of said first and second exits is associated with an post-treatment unit (38) for the article with subsequent storage container or conveyor (60).

24. A device according to claim 23,
**characterised in**
- **that** said exit cooperates with a storage container.

25. A device according to claim 23,
**characterised in**
- **that** the post-treatment unit is a compactor or a disintegrator (38).

26. A device according to claim 23 or 25,
**characterised in**
- **that** the post-treatment unit for said first and said second exits respectively are constructed differently, but are driven by a common drive unit.

27. A device according to one or more of claims 1 - 26,
**characterised in**
- **that** the gate is designed for sorting articles in the form of empties, for example, bottles or cans.

## Patentansprüche

1. Vorrichtung zum gerichteten Führen von Gegenständen mit unterschiedlicher Gestalt, die auf einem Förderband (1) mit Hilfe eines beweglichen Gatters, das steuerbar ist, um sich über dem Förderband zu einem Winkel in Bezug auf die Bewegungsrichtung des Förderbands zu drehen, weg vom Förderband befördert werden,
**dadurch gekennzeichnet, dass**
- das Gatter mindestens eine drehbare motorgetriebene vollständig kreisförmige Scheibe (8, 28, 63, 64, 73, 78, 79) aufweist, die konfiguriert ist, um zu bewirken, dass der Gegenstand zwangsweise durch die Hilfe der Scheibendrehung entlang des Gatters in eine dem Winkel entsprechende Richtung weg vom Förderband und zu einem Ausgang angetrieben wird, wenn die Scheibe in einer Position lokalisiert ist, die den Winkel bildet.

2. Vorrichtung nach Anspruch 1,
**dadurch gekennzeichnet,**
- **dass** das Gatter zwei motorgetriebene, drehbare und parallele Scheiben (63, 64, 78, 79) aufweist, die sich in die gleiche Drehrichtung drehen, wobei die zwei Scheiben um einen Abstand beabstandet sind, der größer ist als der größte Querschnitt eines zu führenden Gegenstands.

3. Vorrichtung nach Anspruch 2,
**dadurch gekennzeichnet,**
- **dass** das Gatter eine Mittelstellung aufweist, in der die zwei Scheiben parallel zur Längsrichtung des Förderbands stehen, um zu ermöglichen, dass die Gegenstände ungehindert dazwischen hindurch laufen.

4. Vorrichtung nach Anspruch 2 oder 3,
**dadurch gekennzeichnet,**
- **dass** die zwei Scheiben durch einen herkömmlichen Antriebsmotor über eine herkömmliche Antriebswelle angetrieben werden, und dass die zwei Scheiben angeordnet sind, um in Bezug zu einem mittig über dem Förderband lokalisierten herkömmlichen Drehpunkt in den Winkel gedreht zu werden.

5. Vorrichtung nach Anspruch 1, 2, 3 oder 4,
**dadurch gekennzeichnet,**
- **dass** die mindestens eine kreisförmige Scheibe eine nicht-vertikale Drehachse aufweist.

6. Vorrichtung nach Anspruch 1, 2, 3, 4 oder 5,
**dadurch gekennzeichnet,**
- **dass** die mindestens eine kreisförmige Scheibe eine horizontale Drehachse aufweist.

7. Vorrichtung nach Anspruch 1, 2, 3 oder 4,
**dadurch gekennzeichnet,**
- **dass** die mindestens eine kreisförmige Scheibe eine nicht-horizontale Drehachse aufweist.

8. Vorrichtung nach einem oder mehreren der Ansprüche 1-7,
**dadurch gekennzeichnet,**
- **dass** das Gatter steuerbar ist, um mindestens drei unterschiedliche Winkel-Positionen in Bezug auf die Bewegungsrichtung des Förderbands anzunehmen.

9. Vorrichtung nach einem oder mehreren der Ansprüche 1-8,
**dadurch gekennzeichnet,**
- **dass** das Gatter steuerbar ist, um mindestens fünf unterschiedliche Winkel-Positionen in Bezug auf die Bewegungsrichtung des Förderbands anzunehmen.

10. Vorrichtung nach einem oder mehreren der vorangehenden Ansprüche,
**dadurch gekennzeichnet,**
- **dass** die mindestens eine kreisförmige Scheibe eine Drehgeschwindigkeit aufweist, die eine Oberflächengeschwindigkeit bei einer radialen Stelle an der Scheibe ergibt, die Kontakt mit dem Gegenstand herstellt, wobei die Geschwindigkeit eine Funktion des Winkels ist, um den das Tor in Bezug auf die Bewegungsrichtung des Förderbands gedreht ist.

11. Vorrichtung nach einem oder mehreren der Ansprüche 1-10,
**dadurch gekennzeichnet,**
- **dass** die mindestens eine kreisförmige Scheibe eine Drehgeschwindigkeit aufweist, die eine Oberflächengeschwindigkeit bei einer radialen Stelle an der Scheibe ergibt, an welcher die Scheibe Kontakt mit dem Gegenstand herstellt, wobei die Geschwindigkeit eine Funktion des Gewichts, der Größe und/oder der Gestalt des Gegenstands ist.

12. Vorrichtung nach Anspruch 10 oder 11,
**dadurch gekennzeichnet,**
- **dass** die Drehgeschwindigkeit der kreisförmigen Scheibe eine Funktion der Bewegungsgeschwindigkeit des Förderbands ist.

13. Vorrichtung nach Anspruch 12,
**dadurch gekennzeichnet,**
- **dass** die Drehgeschwindigkeit der kreisförmigen Scheibe gleich oder größer ist als die Bewegungsgeschwindigkeit des Förderbands.

14. Vorrichtung nach einem oder mehreren der Ansprüche 1-13,
**dadurch gekennzeichnet,**
- **dass** die mindestens eine drehbare und kreisförmige Scheibe gestaltet ist, um zu bewirken, dass der Gegenstand eine beschleunigte Bewegung weg vom Förderband erhält.

15. Vorrichtung nach irgendeinem der vorangehenden Ansprüche,
**dadurch gekennzeichnet,**
- **dass** die mindestens eine drehbare und kreisförmige Scheibe eine Reibungsfläche aufweist.

16. Vorrichtung nach Anspruch 9 oder 10,
**dadurch gekennzeichnet,**
- **dass** das Gatter mit einer Fahnenvorrichtung (17) zum Erkennen der Winkelposition des Gatters in Bezug auf die Bewegungsrichtung des Förderbands zusammen arbeitet.

17. Vorrichtung nach Anspruch 16,
**dadurch gekennzeichnet,**
- **dass** die Fahnenvorrichtung optisch, elektromagnetisch kapazitiv oder elektromechanisch ist.

18. Vorrichtung nach einem oder mehreren der vorangehenden Ansprüche,
**dadurch gekennzeichnet,**
- **dass** das Gatter (8) gestaltet ist, um nach dem Drehen in eine gewünschte Winkelposition, gleichzeitig die Bewegung eines Hilfsgatters (15) zu bewirken, das mit dem Gatter zusammen arbeitet und im Wesentlichen parallel zu dem Gatter mit einem Abstand davon positioniert ist, um den Gegenstand durch einen Raum dazwischen zu leiten.

19. Vorrichtung nach einem oder mehreren der vorangehenden Ansprüche,
**dadurch gekennzeichnet,**
- **dass** eine Detektorvorrichtung (13, 14, 33, 34) zum Identifizieren oder Erkennen von jeglichen kennzeichnenden Merkmalen oder Parametern des Gegenstands stromaufwärts vom Gatter und neben dem Förderband lokalisiert ist.

20. Vorrichtung nach Anspruch 19,
**dadurch gekennzeichnet,**
- **dass** die Vorrichtung auf der Basis der identifizierten oder erkannten Merkmale oder Parameter gestaltet ist, um das Gatter derart zu steuern, dass es eine gewünschte Winkelposition in Bezug auf das Förderband annimmt.

21. Vorrichtung nach einem oder mehreren der Ansprüche 18 oder 19,
**dadurch gekennzeichnet,**
- **dass** die Vorrichtung auf der Basis der identifizierten oder erkannten Merkmale oder Parameter gestaltet ist, um die Drehgeschwindigkeit der mindestens einen Scheibe in Bezug auf die Bewegungsgeschwindigkeit des Förderbands und/oder der Winkelposition des Gatters in Bezug auf das Förderband zu steuern.

22. Vorrichtung nach einem oder mehreren der Ansprüche 1-21,
**dadurch gekennzeichnet,**
- **dass** das Gatter gestaltet ist, um Gegenstände zum Ausgang zu führen, wobei der Ausgang mit Hilfe des steuerbaren Gatters unter mindestens einem ersten und einem zweiten Ausgang auswählbar ist.

23. Vorrichtung nach Anspruch 22,
**dadurch gekennzeichnet,**
- **dass** mindestens einer des ersten und zweiten Ausgangs mit einer Nachbehandlungseinheit (38) für den Gegenstand mit einem nachfolgenden Lagerbehälter oder Förderband (60) verbunden ist.

24. Vorrichtung nach Anspruch 23,
**dadurch gekennzeichnet,**
- **dass** der Ausgang mit einem Lagerbehälter zusammen arbeitet.

25. Vorrichtung nach Anspruch 23,
**dadurch gekennzeichnet,**
- **dass** die Nachbehandlungseinheit eine Presse oder ein Zerkleinerer (38) ist.

26. Vorrichtung nach Anspruch 23 oder 25,
**dadurch gekennzeichnet,**
- **dass** die Nachbehandlungseinheit für den ersten bzw. den zweiten Ausgang unterschiedlich konstruiert sind, jedoch durch eine gemeinsame Antriebseinheit angetrieben werden.

27. Vorrichtung nach einem oder mehreren der Ansprüche 1-26,
**dadurch gekennzeichnet;**
- **dass** das Gatter zum Sortieren von Gegenständen in Form von Leergut, z.B. Flaschen oder Dosen, gestaltet ist.

## Revendications

1. Dispositif pour guider de façon directionnelle des articles de différentes formes, qui sont transportés sur un tapis roulant (1), hors du tapis roulant, à l'aide d'une porte mobile pouvant être contrôlée pour tourner en travers du tapis roulant, de manière à former un angle par rapport à la direction de déplacement du tapis roulant,
**caractérisé en ce que**
- la porte possède au moins un disque rotatif entièrement circulaire (8, 28, 63, 64, 73, 78, 79) entraîné par un moteur, qui est configuré de façon à forcer les articles à passer par la porte à l'aide du disque rotatif, dans une direction correspondant audit angle, hors du tapis roulant vers une sortie, lorsque le disque est positionné de façon à former ledit angle.

2. Dispositif selon la revendication 1,
**caractérisé en ce que**
- la porte possède deux disques rotatifs parallèles (63, 64, 78, 79), entraînés par un moteur, qui tournent dans la même direction de rotation, les deux disques étant espacés d'un écart supérieur à la section transversale maximale des articles à guider.

3. Dispositif selon la revendication 2,
**caractérisé en ce que**
- la porte a une position centrale, dans laquelle les deux disques sont parallèles à la direction longitudinale du tapis roulant, pour permettre aux articles de passer entre eux sans gêne.

4. Dispositif selon la revendication 2 ou 3,
**caractérisé en ce que**
- les deux disques sont entraînés au moyen d'un moteur d'entraînement commun, par l'intermédiaire d'un arbre d'entraînement commun, et les deux disques sont disposés de façon à tourner d'après ledit angle par rapport à un point de pivotement commun qui est situé de façon centrale au-dessus du tapis roulant.

5. Dispositif selon la revendication 1, 2, 3 ou 4,
**caractérisé en ce que**
- ledit disque circulaire, au moins au nombre de un, possède un axe de rotation non vertical.

6. Dispositif selon la revendication 1, 2, 3, 4 ou 5,
**caractérisé en ce que**
- ledit disque circulaire, au moins au nombre de un, possède un axe de rotation horizontal.

7. Dispositif selon la revendication 1, 2, 3 ou 4,
**caractérisé en ce que**
- ledit disque circulaire, au moins au nombre de un, possède un axe de rotation non horizontal.

8. Dispositif selon une ou plusieurs des revendications 1 à 7,
**caractérisé en ce que**
- ladite porte peut être contrôlée de façon à adopter au moins trois positions différentes par rapport à la direction de déplacement du tapis roulant.

9. Dispositif selon une ou plusieurs des revendications 1 à 8,
**caractérisé en ce que**
- ladite porte est disposée de façon à pour pouvoir adopter au moins cinq positions d'angle différentes par rapport à la direction de déplacement du tapis roulant.

10. Dispositif selon une ou plusieurs des précédentes revendications,
**caractérisé en ce que**
- ledit disque circulaire, au moins au nombre de un, a une vitesse de rotation qui produit une vitesse de surface au niveau d'un point radial sur le disque où le disque entre en contact avec l'article, ladite vitesse étant une fonction de l'angle selon lequel la porte tourne par rapport à la direction de déplacement du tapis roulant.

11. Dispositif selon une ou plusieurs des revendications 1 à 10,
**caractérisé en ce que**
- ledit disque circulaire, au moins au nombre de un, a une vitesse de rotation qui produit une vitesse de surface au niveau d'un point radial sur le disque où le disque entre en contact avec l'article, ladite vitesse étant une fonction du poids, de la taille et/ou de la forme de l'article.

12. Dispositif selon la revendication 10 ou 11,
**caractérisé en ce que**
- la vitesse de rotation du disque circulaire est une fonction de la vitesse de déplacement du tapis roulant.

13. Dispositif selon la revendication 12,
**caractérisé en ce que**
- la vitesse de rotation du disque circulaire est égale ou supérieure à la vitesse de déplacement du tapis roulant.

14. Dispositif selon une ou plusieurs des revendications 1 à 13,
**caractérisé en ce que**
- ledit disque rotatif et circulaire, au moins au nombre de un, est conçu pour évacuer en accéléré l'article du tapis.

15. Dispositif selon quelconque des précédentes revendications,
**caractérisé en ce que**
- ledit disque rotatif et circulaire, au moins au nombre de un, a une surface de friction.

16. Dispositif selon la revendication 9 ou 10,
**caractérisé en ce que**
- la porte coopère avec un indicateur (17) permettant de détecter la position angulaire de la porte par rapport à la direction de déplacement du tapis roulant.

17. Dispositif selon la revendication 16,
**caractérisé en ce que**
- l'indicateur est optique, électromagnétique, capacitif ou électromécanique.

18. Dispositif selon une ou plusieurs des précédentes revendications,
**caractérisé en ce que**
- la porte (8) est conçue pour provoquer, lorsqu'elle tourne dans une position angulaire souhaitée, le déplacement simultané d'une porte auxiliaire (15), qui coopère avec elle et qui est disposée essentiellement de façon parallèle par rapport à la porte, à une distance appropriée pour laisser passer l'article par un espace entre les deux.

19. Dispositif selon une ou plusieurs des précédentes revendications,
**caractérisé en ce que**
- un détecteur (13, 14, 33, 34) permettant d'identifier ou de détecter toute caractéristique ou tout paramètre concernant l'article se trouve en amont de la porte, à côté du tapis roulant.

20. Dispositif selon la revendication 19,
**caractérisé en ce que**
- sur la base des caractéristiques ou des paramètres identifiés ou détectés, le dispositif est conçu pour contrôler la porte, en lui faisant prendre une certaine position angulaire par rapport au tapis roulant.

21. Dispositif selon la revendication 18 ou 19,
**caractérisé en ce que**
- sur la base des caractéristiques ou des paramètres identifiés ou détectés, le dispositif est conçu pour contrôler la vitesse de rotation du disque, au moins au nombre de un, par rapport à la vitesse de déplacement du tapis roulant et/ou à la position angulaire de la porte par rapport au tapis roulant.

22. Dispositif selon une ou plusieurs des revendications 1 à 21,
**caractérisé en ce que**
- la porte est conçue pour guider des articles vers ladite sortie, ladite sortie pouvant être sélectionnée à l'aide de la porte contrôlable, entre au moins une première et une deuxième sortie.

23. Dispositif selon la revendication 22,
**caractérisé en ce que**
- parmi la première et la deuxième sorties, au moins l'une est associée à une unité de post-traitement (38) pour l'article, suivie par un conteneur de stockage ou un tapis roulant (60).

24. Dispositif selon la revendication 23,
**caractérisé en ce que**
- ladite sortie coopère avec un conteneur de stockage.

25. Dispositif selon la revendication 23,
**caractérisé en ce que**
- l'unité de post-traitement est un compacteur ou un désintégrateur (38).

26. Dispositif selon la revendication 23 ou 25,
**caractérisé en ce que**
- l'unité de post-traitement et lesdites première et deuxième sorties sont construites différemment, mais elles sont entraînées par une unité d'entraînement commune.

27. Dispositif selon une ou plusieurs des revendications 1 à 26,
**caractérisé en ce que**
- la porte est conçue pour trier les articles en fonction de ceux qui sont vides, par exemple des bouteilles ou des canettes.
